**Europäisches Patentamt**

**European Patent Office**

**Office européen des brevets**

(11) Veröffentlichungsnummer: **0 042 361**
**A1**

# EUROPÄISCHE PATENTANMELDUNG

(21) Anmeldenummer: 81810238.6

(22) Anmeldetag: 11.06.81

(51) Int. Cl.³: **G 01 N 21/87**

(30) Priorität: 17.06.80 CH 4650/80

(43) Veröffentlichungstag der Anmeldung: 23.12.81
Patentblatt 81/51

(84) Benannte Vertragsstaaten: BE CH DE FR GB LI

(71) Anmelder: **GRETAG Aktiengesellschaft,
Althardstrasse 70, CH-8105 Regensdorf (CH)**

(72) Erfinder: **Ehrat, Kurt, Grebweg 17, CH-8162 Steinmaur
(CH)**
Erfinder: **Mueller, Kurt Hugo, Dr., Höhenstrasse 15A,
CH-8304 Wallisellen (CH)**

(74) Vertreter: **Pirner, Wilhelm et al, Patentabteilung der
CIBA-GEIGY AG Postfach, CH-4002 Basel (CH)**

(54) **Verfahren und Vorrichtung zur maschinellen Identifikation von Edelsteinen.**

(57) Der zu identifizierende Edelstein (1) befindet sich zusammen mit einem Datenträger (2) in einem Aufbewahrungsbehältnis (3). Er wird in einer Zentralstation (9a) mit Licht angestrahlt und das von seinen Flächen reflektierte Licht wird auf einer Mattscheibe (66) aufgefangen. Von den zahlreichen Lichtflecken, deren Verteilung und Grösse charakteristisch ist für den betreffenden Edelstein, werden visuell einige ausgewählt und photoelektrisch vermessen. Die dabei gewonnenen Messdaten werden zusammen mit den die Lage und Grösse der Flecke bezeichnenden Messinstruktionen auf den Datenträger (2) in chiffrierter Form aufgezeichnet. Bei der Prüfung des Edelsteins (1) wird er zusammen mit dem ihm zugeordneten Datenträger (2) in eine Prüfeinrichtung (9b) eingeführt und dort in gleicher Weise wie in der Zentralstation (9a) vollautomatisch vermessen, wobei die Position der Messbereiche durch die dechiffrierten Messinstruktionen aus dem Datenträger (2) bestimmt sind. Die gemessenen Abtastwerte werden dann mit den dechiffrierten gespeicherten Messwerten verglichen und daraus der Identifikationsbefund abgeleitet.

- 1 -

Gretag Aktiengesellschaft                7-12907

Regensdorf (Schweiz)

Verfahren und Vorrichtung zur maschinellen Identifikation von Edelsteinen.

---

Die Erfindung betrifft ein Verfahren und eine Vorrichtung zur
maschinellen Identifikation von Edelsteinen gemäss Oberbegriffen der
Ansprüche 1 und 15.

Der Wert eines Edelsteins ist durch seine Merkmale wie Grundmaterial, Grösse, Schliff, Reinheit, Färbe usw. bestimmt. Diese Edelsteinmerkmale werden bislang grösstenteils manuell bzw. visuell durch
Fachleute gemessen bzw. ermittelt unter Zuhilfenahme von Mikroskopen,
Refraktometern, Spektrometern und änderen Spezialgeräten. Die Daten
aller so ermittelten Edelstein-Merkmale bilden zusammengefasst das
Edelstein-Zertifikat, welches von Edelstein zu Edelstein verschieden
ist. Das einem Edelstein zugeordnete Zertifikat dokumentiert seinen
Wert, seine Echtheit und kann zur Identifikation des Edelsteins benützt werden.

Die Echtheitsprüfung und Identifikation des Edelsteins anhand
des zugeordneten Zertifikats kann praktisch nur manuell bzw. visuell
durch geschultes Fachpersonal durchgeführt werden und ist recht aufwendig und teuer. Eine maschinelle Ueberprüfung der Zertifikatsdaten
wäre ausserordentlich kompliziert. Eine halb-maschinelle Echtheitsprüfung und Identifikationsmethode ist bekannt geworden, bei welcher
der Edelstein mit Licht angeleuchtet wird und das aus ihm austretende
Licht auf einem Bildschirm ein aus einer grossen Anzahl von Lichtflecken bestehendes Edelsteinbild - ein sogenanntes "Gem-Print" -
erzeugt, in welchem die Grösse, Form und Position der Lichtflecke durch
die Lichtbrechung im Edelstein, durch Reflexionen, durch Dispersion

- 2 -

und Absorption und somit unter anderm vom Material, von der Grösse und vom Schliff, von der Art der Facetten usw. abhängig ist. Ein voll maschineller Vergleich eines solchen Edelsteinbildes mit einem Vorlage-Bild zum Zweck der Edelstein-Identifikation nach den bekannten elektronischen Bildmuster-Erkennungsmethoden ("Pattern-Recognition") wäre äusserst kostspielig und nicht sehr zuverlässig, da einzelne der Lichtflecken zufolge von Vielfach-Reflexion in ihrer Position nicht genügend konstant sind. Deshalb wird in der Praxis durchwegs eine halbmaschinelle Methode angewandt, bei welcher vom Edelsteinbild eine Photographie erstellt wird, welche visuell mit einer Vorlage-Photographie verglichen wird. Der Nachteil dieser Methode ist, dass die Identifikation durch eine Bedienugsperson durchgeführt werden muss und in Grenzfällen von deren Urteilsfähigkeit abhängig und deshalb nicht sehr zuverlässig ist.

Durch die Erfindung sollen nun ein Verfahren und eine Vorrichtung geschaffen werden, die eine völl maschinelle Identifikation und Echtheitsprüfung von grosser Zuverlässigkeit und relativ geringem Aufwand ermöglichen. Das Verfahren und die Vorrichtung gemäss der Erfindung sind in den Patentansprüchen 1 und 15 beschrieben.

Die Erfindung soll nun anhand der Zeichnungen erläutert werden: Es zeigen:

Fig. 1 ein Ausführungsbeispiel einer erfindungsgemässen Vorrichtung,

Fig. 2 einen vergrösserten Teilauschnitt aus der Fig. 1,

Fig. 3 eine Ansicht in Richtung des Pfeils III in Fig. 2,

Fig. 4 eine graphische Darstellung von Messfunktionen, und zwar

Fig. 4a die Lichtintensität bei einer photoelektrischen Abtastung eines Messfeldes in Funktion des Abtastweges,

Fig. 4b den Verlauf des Differentialquotienten der Funktion von Fig. 4a,

Fig. 4c die binäre Darstellung von zwei diskreten Punkten von Fig. 4b,

Fig. 5 eine Ansicht ähnlich Fig. 3, jedoch mit einer Detailvariante, und

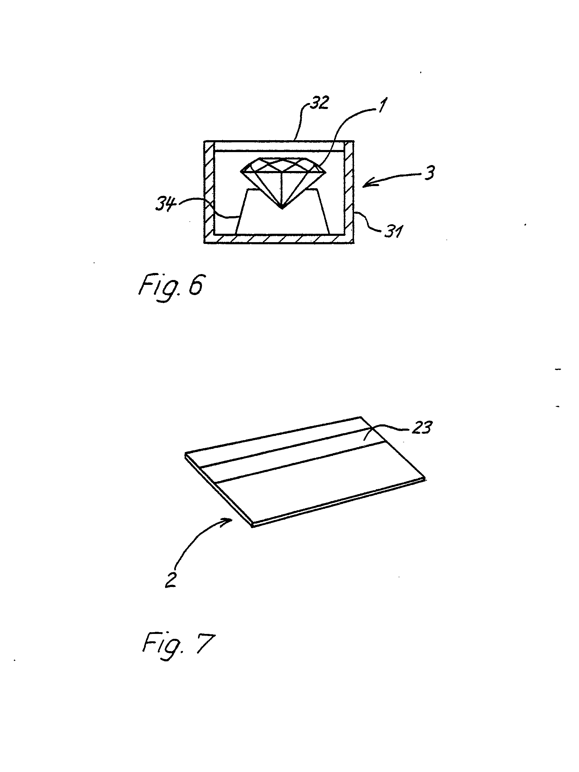

Fig. 6 und 7 zwei Varianten von Details der Vorrichtung gemäss Fig. 1.

- 3 -

Es wird vorerst die prinzipielle Wirkungsweise des Verfahrens beschrieben. In einer Edelstein-Zentrale, in der normalerweise auch mit manuellen bzw. visuellen Methoden die Edelsteine geprüft und die Edelstein-Zertifikate erstellt werden, befindet sich eine Zentralsatation 9a, welche geeignet ist zur Feststellung, Messung und Auswahl von Edelstein-Merkmalen, welche als Identifikationsdaten in einem Informationsspeicher 2 maschinell auslesbar gespeichert werden können. Von der grossen Zahl von Merkmalen werden nur ganz wenige, z.B. zwei bis drei, ausgewählt und nur solche, welche bei einer späteren maschinellen Edelstein-Prüfung eindeutige Prüfwerte ergeben. Diese spätere Prüfung findet in einem Prüfgerät 9b statt, und zwar vollautomatisch.

Zur Ermöglichung dieser vollautomatischen Prüfung werden in der Zentralstation normalerweise ausser den ausgewählten Identifikationsdaten auch die zu deren Messung nötigen Messinstruktionen festgelegt und im Informationsspeicher 2 gespeichert. Bei der Prüfstation werden die Messinstruktionen aus dem Informationsspeicher ausgelesen, danach die Messungen am Edelstein in einer im Prüfgerät enthaltenen Mess- und Prüfeinrichtung 6 vollautomatisch durchgeführt und die gemessenen Identifikationsdaten danach mit den aus dem Informationsspeicher ausgelesenen verglichen, ebenfalls voll maschinell. Bei genügender Uebereinstimmung der aus dem Speicher ausgelesenen mit den im Prüfgerät gemäss den Messinstruktionen gemessenen Identifikationsdaten ist der Edelstein identifiziert, bzw. wird er als echt befunden. In der Zentralstation 9a, bei der Ermittlung der Messinstruktionen und der Identifikationsdaten muss der Edelstein die gleiche Relativposition zur Mess- und Prüfeinrichtung 6 aufweisen wie bei der späteren Prüfung im Prüfgerät 9b, damit an beiden Stellen aus gleichen Messinstruktionen auch gleiche Messergebnisse bzw. gleiche Identifikationsdaten entstehen. Deshalb ist der Edelstein in einem Behälter 3 gut fixiert eingebaut, welcher sowohl in der Zentralstation 9a als auch im Prüfgerät 9b mittels Anschlägen 41 in definierter Position gehalten wird.

- 4 -

Von den vielen Edelstein-Merkmalen, welche z.B. im Zertifikat enthalten sind, werden also vorzugsweise nur einige wenige, z.B. 1 bis 2 % ausgewählt und als Identifikationsdaten verwendet, und die Messinstruktionen werden bei der Zentralstation so eindeutig festgelegt, dass die spätere vollautomatische Messung und Auswertung im Prüfgerät einwandfrei und zufolge der kleinen Informationsmenge auch sehr wirtschaftlich durchführbar ist. Um zu vermeiden, dass bei der kleinen Anzahl der verwendeten Merkmale, also z.B. 1 bis 2 %, auch die Sicherheit gegen Fälschung auf 1 bis 2 % reduziert wird, werden die Merkmale "halbzufällig" und von Edelstein zu Edelstein verschieden ausgewählt und werden die Messinstruktionen und die Identifikationsdaten vorzugsweise verschlüsselt im Informationsspeicher 2 gespeichert. Im Prüfgerät wird die Auswahl der zu messenden Edelsteinmerkmale gemäss den entschlüsselten Messinstruktionen und der Vergleich der gemessenen mit den entschlüsselten Identifikationsdaten durchgeführt. Ein Unbefugter hat deshalb keine Kenntnis, welche zwei aus z.B. hundert Merkmalen zur Messung und Identifikation ausgewählt wurden, und müsste deshalb in einer Fälschung nicht nur zwei sondern hundert Prozent der Merkmale imitieren, was natürlich nicht möglich ist.

Die Verschlüsselung in der Zentralstation sowie die Entschlüsselung im Prüfgerät erfolgt mit in Zentralstation und Prüfgerät befindlichen identischen Geheimschlüsseln (721) und Chiffrierrechnern (722).

In einer besonderen Ausführungsform des Verfahrens wird die Echtheit der im Informationsspeicher gespeicherten Daten wie Messinstruktionen, Identifikationsdaten, übrige Zertifikationsdaten, mittels eines nur dem Edelsteinbesitzers bekannten Kennwortes bzw. einer Memozahl gegen Fälschung gesichert. Die Wirkungsweise dieser Sicherung wird weiter unten näher erläutert.

Im Prinzip kann die Auswahl der für die Identifikation verwendeten Identifikationsdaten aus sämtlichen Edelstein-Merkmalen des Zertifikats getroffen werden. Besonders geeignet für diese Auswahl ist z.B. die Form und die Position von Reflexions-Lichtflecken, welche durch Lichtbestrahlung des Edelsteins aus definierter Lichteinfalls-Richtung an den geschliffenen Flächen bzw. Facetten des Edelsteins entstanden sind. Die Grösse, Form, geometrische Lage und Winkelposition dieser Flächen bzw. Facetten zeigen von Edelstein zu Edelstein gewisse Abweichungen, welche in der Form und Position der Reflexions-Lichtflecke erkennbar und messbar werden. Zufolge dieser Abweichungen kann deshalb die Ausmessung einer Auswahl von Reflexions-Lichtflecken zur Edelstein-Identifikation herangezogen werden.

Eine zweite Art von für die Identifikation ausgewählten Edelstein-Merkmalen sind Form, Grösse, Position und allfällig Farbe von als Druchdringungslichtflecke bezeichneten Lichtflecken, welche durch Lichtbestrahlung des Edelsteins aus definierter Lichteinfallsrichtung durch Lichtstrahlen entstanden sind, welche in den Edelstein eingedrungen sind, in diesem an den Facetten ein bis mehrmals total reflektiert wurden und wieder aus dem Edelstein ausgetreten sind. Diese ausgetretenen Lichtstrahlen sind erstens von der Form und Geometrie der Facetten, zweitens von den Refraktions- und Dispersions-Eigenschaften des Edelsteins und drittens von der Transparenz bzw. Farbe bzw. Unreinheiten des Edelsteins abhängig und für jeden Edelstein charakteristisch und deshalb zur Identifikation geeignet.

Im weiter unten näher beschriebenen Ausführungsbeispiels des Verfahrens wird mindestens ein Reflexions-Lichtfleck und ein Durchdringungs-Lichtfleck für die Identifikation, d.h. zur Gewinnung der Identifikationsdaten ausgewählt. Insbesondere bei der Auswahl des Durchdringungs-Lichtflecks ist darauf zu achten, dass auch unter Berücksichtigung der Toleranzen der Mess- und Prüfeinrichtung die gemessenen Identifikationsdaten reproduzierbar sind.

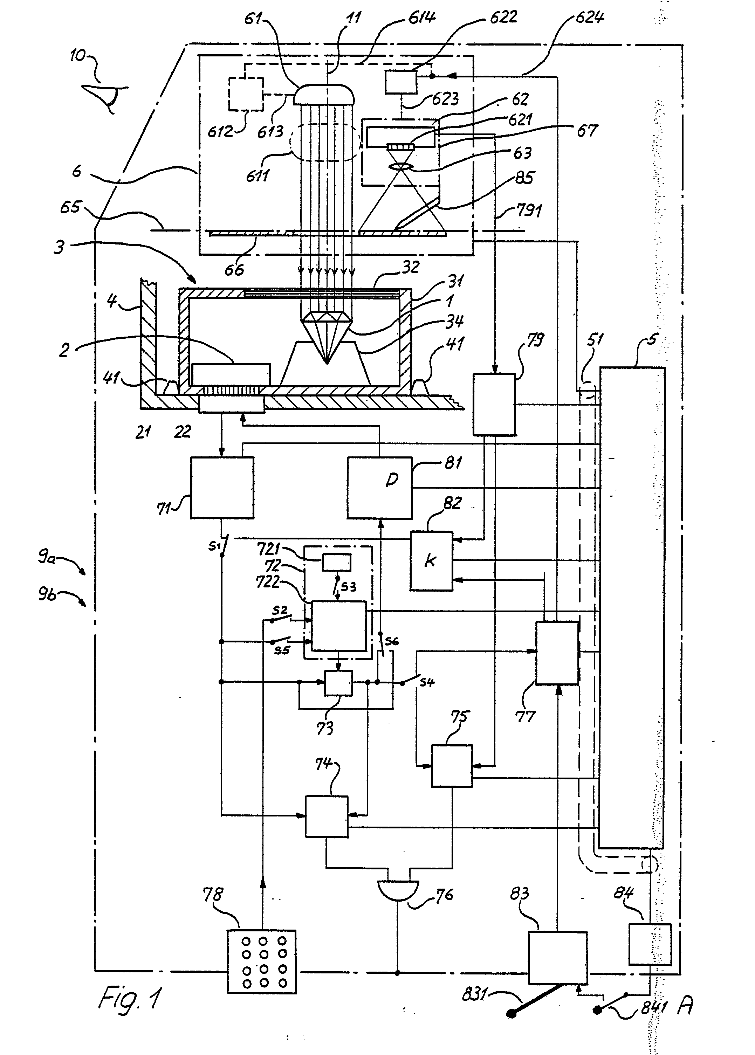

Fig. 1 zeigt eine Einrichtung, welche sowohl als Zentralstation 9a zur Gewinnung der Identifikationsdaten des Edelsteins, als auch als Prüfgerät 9b zur automatischen Edelsteinprüfung dienen kann.
Der Unterschied zwischen Zentralstation und Prüfgerät besteht darin,
dass beim Prüfgerät die für die Auswahl und Speicherung der Identifikationsdaten nötigen Einrichtungen 81, 82, 83, 84, 85 samt ihren Zuleitungen weggelassen sind. Ein weiterer, wesentlicher Unterschied ist, dass im Prinzip nur eine einzige Zentralstation existiert,
während es eine grössere Anzahl von Prüfgeräten geben kann.
Ferner werden in der Zentralstation gleichzeitig mit der Erstellung
des Edelstein-Zertifikats halbmanuell die Identifikationsdaten ausgewählt. Diese ist für jeden Edelstein ein einmaliger Vorgang. Die
spätere Prüfung des Edelsteins in einem Prüfgerät kann viele Male
erfolgen und diese Prüfung ist vollautomatisch.

In der Zentralstation 9a werden die für die Edelsteinidentifikation nötigen Identifikationsdaten ausgewählt, die für deren Messung
nötigen Messinstruktionen erstellt und sowohl Identifikationsdaten als
auch Messinstruktionen, vorzugsweise verschlüsselt, im Informationsspeicher gespeichert.

Die Funktionsweise der Vorrichtung wird nun im Einzelnen beschrieben. Dabei ist die Beschreibung der Einrichtungen, welche sowohl
in der Zentralstation als auch im Prüfgerät vorhanden sind (alle
ausser 81 bis 85), für Zentralstation und Prüfgerät gleichermassen
gültig.

Der Edelstein 1 ist mittels einer Hälterung 34 in einem Behälter
3 mit Gehäuse 31 und transparentem Fenster 32 fest montiert und
fixiert. Der Behälter kann leicht in die Zentralstation bzw. in das
Prüfgerät eingesetzt und herausgenommen werden. Im eingesetzten
Zustand wird der Behälter mittels Anschlägen 41 im Traggerüst 4 der
Zentralstation bzw. des Prüfgerätes in eindeutiger Position gehalten.
Im Behälter 3 ist ferner ein Informationsspeicher 2 untergebracht,
welcher über Steckkontakte 21 und Stecker 22 mit den übrigen Einrichtungen der Zentralstation bzw. des Prüfgerätes verbindbar ist.
Der Informationsspeicher 2 kann beispielsweise ein programmierbares ROM (Read Only Memory), oder ein magnetischer Blasenspeicher (Magnetic Bubble Memory) oder ein batterigespiesenes RAM (Random Access Memory) oder dergleichen sein.

Die Mess- und Prüfeinrichtung 6 enthält eine Lichtquelle 61, mit welcher der Edelstein 1 mit beispielsweise parallel gerichteten Lichtstrahlen 611 angestrahlt werden kann. Die Richtung dieser Lichtstrahlen kann durch Aenderung der Position der Lichtquelle durch einen Positioniermotor 612 über die Ankopplung 613 veränderbar und ein Bestandteil der Messinstruktionen sein, welche über Leitung 614 an den Positioniermotor 612 vermittelt werden.

Die Mess- und Prüfeinrichtung 6 enthält ferner die photoelektrische Abtastvorrichtung 67 mit dem Photodioden-Array 62 und dessen Einzel-Dioden 621, sowie das Abbildungs-Objektiv 63, mittels welchem die in einer in der Abtastebene 65 liegenden Mattscheibe 66 entstehenden Reflexions- bzw. Durchdringungs-Lichtflecke auf das Photodioden-Array abgebildet werden.

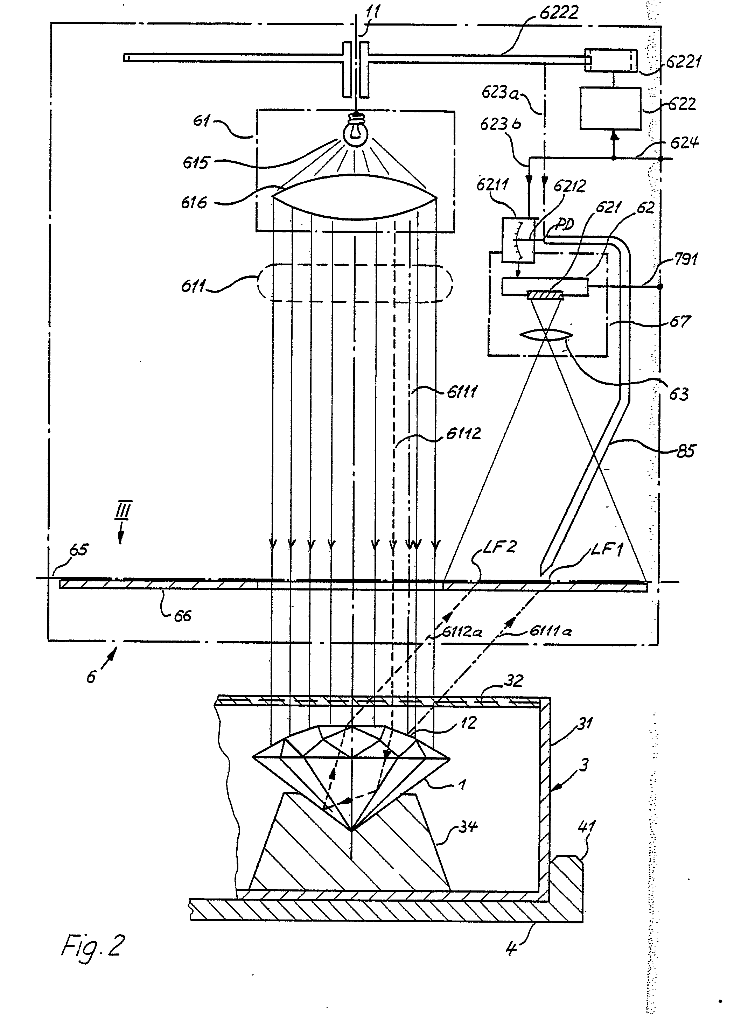

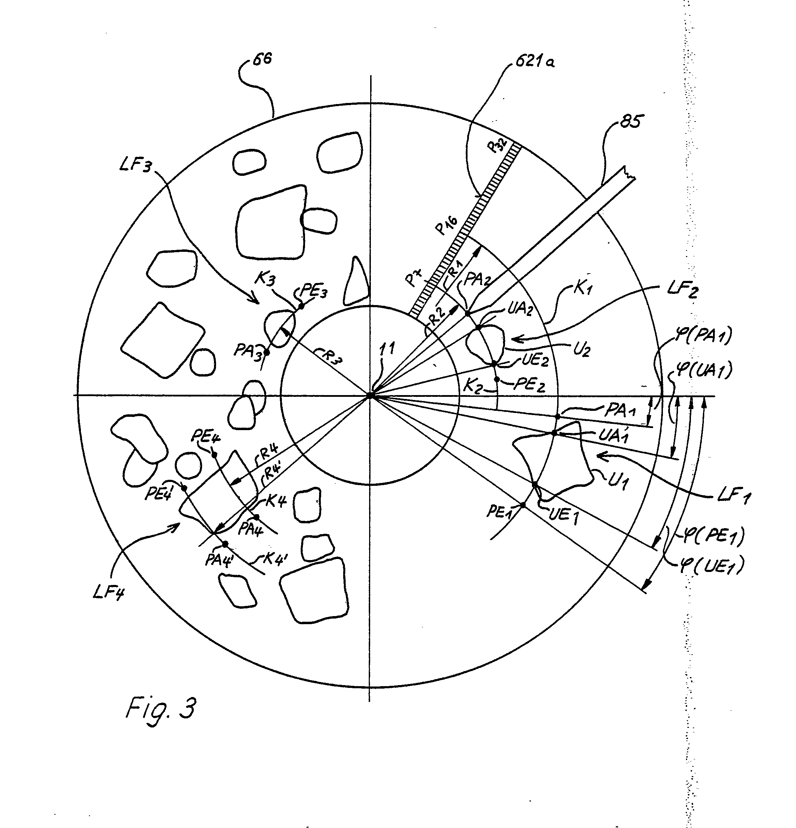

Im hier beschriebenen Beispiel handelt es sich um einen Edelstein mit ausgeprägter Hauptsymmetrieachse 11, z.B. einen Brillanten, wobei die Mattscheibe eine konzentrisch zur Hauptsymmetrieachse gelegene Kreisringscheibe ist, und die Abtastebene senkrecht auf der Hauptsymmetrieachse steht. Das lineare Photodioden-Array ist radial zur Hauptsymmetrieachse ausgerichtet. Eine Projektion 621a der Photodioden-Linie auf die Mattscheibe 66 durch das Objektiv 63 ist in Fig. 3 aufgezeichnet, woraus ersichtlich ist, dass durch Rotation des Photodioden-Arrays um die Hauptsymmetrieachse alle Bereiche der Ringfläche der Mattscheibe 66 photoelektrisch abtastbar sind. Die Lichteinstrahlung 611 auf den Edelstein erfolgt im Beispiel parallel zur Hauptsymmetrieachse 11 durch die Zentralöffnung der Mattscheibe hindurch. Die Rotation des Photodioden-Arrays um die Hauptsymmetrieachse erfolgt mittels Stellmotor 622 über die Ankoppelung 623. Mittels eines Verstellzeigers 85 können die photoelektrisch abzutastenden Lichtflecke auf der Mattscheibe maschinell

- 8 -

oder halbmaschinell oder visuell als zu speichernde Identifikationsdaten ausgewählt werden. Die visuelle Auswahl ist durch ein schematisiert gezeichnetes menschliches Auge 10 angedeutet. Die Information
zur Bewegung des Stellmotors wird über Leitung 624 eingegeben
und diese Information sowie auch die Information zur radialen Auswahl
der abzutastenden Bildbereiche gehören zur Messinstruktion, welche
die zu messende Auswahl der Edelstein-Merkmale zur Gewinnung der Identifikationsdaten festlegt. Ein Beispiel für diese Auswahl und Gewinnung wird unten anhand der Fig. 2 und 3 erläutert.

Ein Beispiel der generellen Wirkungsweise bei der Auswahl
der Identifikationsdaten und der Festlegung der Messinstruktionen
in der Zentralstation wird nun anhand von Fig. 1 beschrieben.

Mittels eines von Hand betätigten Eingabe-Manipulators 831
wird in einem Positioniergeber 83 die Positionsinformation erzeugt,
welche über den Daten-Wandler und Verstärker 77 dem Stellmotor 622
zugeführt wird, welcher die Positionierung der photoelektrischen Abtastvorrichtung 67 bewirkt. Die Positionierung ist visuell mit dem
menschlichen Auge 10 mittels des Verstellzeigers 85 überprüfbar.
Dieser Verstellzeiger wird mittels des Manipulators 831 z.B. quer über
einen ausgewählten, auf der Mattscheibe 66 sichtbaren Lichtfleck geführt. Die Positionsinformation entspricht der für die spätere Edelsteinprüfung benötigten Mess-Instruktion und wird nach geeigneter
Codierung im Codierer 82 bei umgelegtem Schalter $S_1$ dem
Chiffrier-Mischer 73 zugeführt. Schalter $S_3$ ist geschlossen, $S_2$ und
$S_5$ geöffnet und $S_4$ ist umgelegt. Der zweite Eingang des Chiffriermischers 73 wird von der Chiffriereinrichtung 72 mit Chiffrierrechner
722 und Geheimschlüssel 721 gespiesen. Die chiffrierten Messinstruktionen am Ausgang des Chiffriermischers 73 werden über einen
Programmierteil 81, z.B. einen "PROM-Programmer", auf den Informationsspeicher 2 gegeben, wo sie gespeichert werden.

Es ist wünschenswert, dass von Edelstein zu Edelstein verschiedene Bereiche zur Gewinnung der Identifikationsdaten ausgewählt werden. Um dies möglichst einwandfrei zu gewährleisten, kann ein Zufallsgenerator 84 durch Schliessen des Schalters 841 wirksam werden. Dadurch wird über Positionsgeber 83 und Datenwandler 77 die photoelektrische Abtastvorrichtung 67 in eine zufällige Position gesteuert, welche am Verstellzeiger 85 ablesbar ist. In der Nachbarschaft dieser zufälligen Position wird nun visuell der abzutastende Bereich so ausgewählt, dass für die Auswertung geeignete Identifikationsdaten entstehen, die alsdann gespeicherten Messinstruktionen sind also "halbzufällig – halbvisuell" entstanden.

Gemäss den mittels Positionsgeber 83 und/oder Zufallsgenerator 84 ausgewählten Messinstruktionen erfolgt nun die photoelektrische Abtastung des ausgewählten Bildbereichs. Das so gewonnene Abtastsignal 791, welches die ausgewählten Identifikationsdaten enthält, gelangt vom Photodioden-Array 62 über den Signal-Former und Verstärker 79 und über den Codierer 82 auf den Chiffriermischer 73, in welchem die Chiffrierung der gemessenen Identifikationsdaten in gleicher Weise wie jene der Messinstruktionen erfolgt. Die chiffrierten Identifikationsdaten gelangen über den Programmierteil 81 auf den Informationsspeicher 2, wo sie gespeichert werden.

Es sind zwei weitere Varianten für die Speicherung der Messinstruktionen und der Identifikationsdaten vorgesehen. Bei der ersten Variante ist der Schalter $S_2$ geschlossen, und über eine Tastatur 78 kann während der Speicherungsphase in der Zentralstation eine nur dem Edelsteinbesitzer bekannte geheime Memozahl bzw. ein geheimes Kennwort in den Chiffrierrechner eingegeben werden, wonach eine spätere Dechiffrierung der Messinstruktionen und Identifikationsdaten während der Edelsteinsprüfung im Prüfgerät nur durch Eingabe der Memozahl bzw. des Kennwortes möglich ist. Die Edelsteinprüfung ist also einerseits vom dem Prüfgerät zugeordneten Geheimschlüssel 721 und anderseits von der nur dem Edelsteinbesitzer bekannten Memozahl abhängig.

Bei der zweiten Variante werden die Messinstruktionen und Identifikationsdaten vor der Speicherung nicht chiffriert. Der Schalter

$S_6$ ist umgelegt. Nach der Speicherung wird Schalter $S_6$ zurückgestellt und bei geöffnetem Schalter $S_3$ und geschlossenen Schaltern $S_2$ und $S_5$ werden die Messinstruktionen und Identifikationsdaten samt einer geheimen Memozahl aus Tastatur 78 in den Chiffrierrechner eingegeben, in welchem eine Kryptonummer erzeugt wird, welche ebenfalls im Informationsspeicher 2 gespeichert wird. Während der späteren Prüfung im Prüfgerät wird die Echtheit bzw. Autenthizität der gespeicherten Messinstruktionen und Identifikationsdaten durch Eingabe der Memozahl im Prüfgerät, Bildung der Kryptonummer und Vergleich mit der gespeicherten Kryptonummer überprüft.

In der Zentralstation 9a sind ausser den Einrichtungen zur Bestimmung der Messinstruktionen und Ermittlung der Identifikationsdaten sowie deren Speicherung auch sämtliche im Prüfgerät 9b enthaltenen, für die Edelsteinprüfung nötigen Vorrichtungen vorhanden. Im Normalfall wird in der Zentralstation jeweils nach der Ermittlung und Speicherung der Daten zur Kontrolle der Edelstein in gleicher Weise geprüft, wie dies später im Prüfgerät geschieht. Diese Edelsteinprüfung wird nun beschrieben.

Das Prüfgerät 9b enthält die Einrichtungen 81 bis 85 zur Ermittlung der Daten nicht, dagegen alle übrigen zur Identifikation des Edelsteins erforderlichen Elemente gemäss Fig. 1. Wie bei der Zentralstation wird auch im Prüfgerät der Edelstein 1 samt Behälter 3 in definierter Position eingesetzt. Anschliessend erfolgt die Prüfung vollautomatisch gemäss den anschliessend beschriebenen Vorgängen.

Zuerst werden die im Informationsspeicher 2 gespeicherten Messinstruktionen mittels der Auslese-Vorrichtung 71 ausgelesen und, bei nicht umgelegten Schalter $S_1$, dem Chiffriermischer 73 zugeführt. Schalter $S_3$ ist geschlossen, $S_2$ allfällig bei Variante Eins ebenfalls geschlossen, Schalter $S_5$ ist offen und Schalter $S_4$ ist nicht umgelegt. Die mittels der Chiffriereinrichtung 72 dechiffrierten Messinstruktionen gelangen über den Datenwandler 77 auf die Mess- und Prüfeinrichtung 6 und bewirken dort die Abtastung der ausgewählten Bereiche und dadurch durch Messung die Ermittlung der Identifikationsdaten. Anschliessend werden die im Informationsspeicher 2 gespeicherten Identifikationsdaten mittels der Auslese-Vorrichtung 71
ausgelesen, auf den Chiffriermischer 73 eingegeben und mittels der
Chiffriereinrichtung 72 dechiffriert und bei umgelegtem Schalter
$S_4$ dem Vergleicher 75 zugeführt.

Hier werden die gemessenen mit den im Informationsspeicher 2
gespeicherten Identifikationsdaten verglichen, und bei Uebereinstimmung der Edelstein als echt befunden. In der oben beschriebenen
ersten Variante wird zusätzlich in einem Nummern-Vergleicher 74
die im Informationsspeicher gespeicherte Kryptonummer mit der während
der Prüfung errechneten Kryptonummer verglichen .
Die Ausgänge der beiden Vergleiche 75 und 74 werden auf das UND-Tor
76 geführt, dessen Ausgangszustand massgebend für die Echtheit des
Edelsteins ist.

Die zeitlichen Abläufe aller beschriebenen Vorgänge in Zentralstation und Prüfgerät werden über die Steuerleitungen 51 durch den
Steuerteil 5 gesteuert.

Anhand der Figuren 2 bis 4 wird ein Ausführungsbeispiel erläutert, bei dem die Messinstruktionen besonders einfach sind und die
Identifikation besonders leicht durchführbar ist.

Gemäss Fig. 2 und 3 wird jeweils eine radiale Linie der
kreisringförmigen Mattscheibe 66 auf das radial gerichtete Photodioden-Array 62 abgebildet. Das Photodioden-Array samt Objektiv 63
und Verstellzeiger 85 kann mittels Stellmotor 622 über das Getriebe
62221, 6222 und die Ankoppelungsverbindung 623a um die Hauptsymmetrieachse 11 verdreht werden und jede mögliche Winkellage 4 einnehmen.
Die Spitze des Verstellzeigers 85 kann durch dessen Verdrehung um den
Punkt PD in radialer Richtung bewegt werden, wobei gleichzeitig
in einem Wählschalter 6211 diejenige Photodiode des Arrays 621 ausgewählt wird, welche dem Radius R entspricht, welche der mittels Objektiv 63 auf die Mattscheibe abgebildeten Photodiode entspricht. Steht also z.B. gemäss Fig. 3 die Zeigerspitze auf dem Radius $R_2$, so wird die Photodiode $P_7$ aktiv und beim Drehen des Photodioden-Arrays wird eine Abtastlinie $K_2$, welche eine Kreisbahn ist, auf der Mattscheibe photoelektrisch abgetastet. Die Photozellen-Auswahl erfolgt über die Ankopplungsleitung 623b. Die Lichtquelle 61 gemäss Fig. 2 besteht aus einer punktförmigen Lampe 615 und einer Projektionsoptik 616, welche ein parallel gerichtetes Lichtstrahlenbündel 611 erzeugt und den Edelstein anstrahlt. Die Lichtquelle könnte auch ein LASER sein, oder die Projektionsoptik könnte auch weggelassen sein.

In Fig. 2 sind schematisiert die Strahlengänge von zwei speziell ausgewählten Lichtstrahlen eingezeichnet. Der eine Lichtstrahl 6111 ist strich-doppelpunktiert gezeichnet und erzeugt als von einer Edelstein-Aussenfläche reflektierter Strahl 6111a auf der Mattscheibe 66 einen Reflexions-Lichtfleck $LF_1$. Der zweite Licht-strahl 6112 ist punktiert gezeichnet und erzeugt nach Durchdringung des Edelsteins, mehrfacher Totalreflexion und Brechung als austretender Lichtstrahl 6112a den Durchdringungs-Lichtfleck $LF_2$ auf der Matt-scheibe.

Gemäss Fig. 3 entstehen so auf der Mattscheibe eine grössere Anzahl von Lichtflecken LF, von denen einzelne Reflexionslichtflecke und andere Durchdringungslichtflecke sind. In der rechten Bildhälfte von Fig. 3 sind aus Gründen der Uebersichtlichkeit nur zwei Lichtflecke eingezeichnet. Aus diesen Lichtflecken werden nun in der Zentralstation einzelne geeignete als Edelsteinmerkmale ausgewählt, welche die Identifikationsdaten abgeben. Durch Wahl des Abtastradius, z.B. $R_2$, wird mittels der selektionierten Photozelle, z.B. $P_7$, eine kreisförmige Abtastlinie $K_2$ photoelektrisch abgetastet. Man legt die Abtastlinie so, dass sie den ausgewählten Lichtfleck gut überschneidet und mit den Umrisslinien des Lichtflecks eindeutige Schnittpunkte ergibt. Die photoelektrische Abtastung erfolgt von einem ausserhalb des Lichtflecks liegenden Anfangspunkt, z.B. $PA_2$, längs der

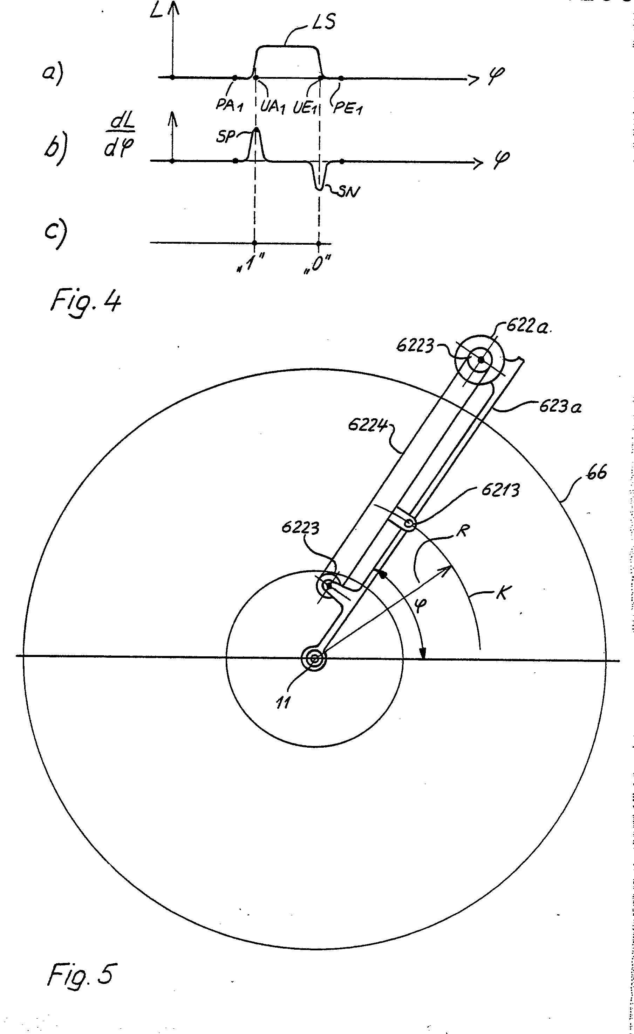

Kreisbahn, z.B. $K_2$, über den Lichtfleck, z.B. $LF_2$, hinweg bis zum wiederum ausserhalb des Lichtflecks liegenden Endpunkt, z.B. $PE_2$. Dadurch ist gewährleistet, dass die Schnittpunkte, z.B. $UA_2$, $UE_2$, der mit Abtastkreis bezeichneten Abtastlinie mit der Umrisslinie des Lichtflecks im Abtastbereich liegen. Der ausgewählte Radius, z.B. $R_1$, des Abtaskreises sowie die Winkellage, z.B. $\mathcal{S}(PA_1)$ und $\mathcal{S}(PE_1)$, der Anfangs- und Endpunkte, also zusammen drei Zahlen, bilden die ganze Messinstruktion für die Abtastung längs einer Abtastlinie über dem Lichtfleck $LF_1$. Diese Messinstruktion wird in der Zentralstation im Informationsspeicher 2 gespeichert. Während der photoelektrischen Abtastung längs eines Abtastkreises, z.B. $K_1$ vom Anfangspunkt $PA_1$ bis Endpunkt $PE_1$, entsteht ein Abtastsignal LS, welches in Fig. 4a aufgezeichnet ist. Dieses weist beim Schnittpunkt $UA_1$ des Abtastkreises mit der Umrisslinie des Lichtflecks einen positiven Sprung und beim Schnittpunkt $UE_1$ einen negativen Sprung auf. Wird nun von diesem Signal der Differentialquotient in Funktion des Drehwinkels 4 gebildet, so enthält dieser bei $UA_1$ eine positive Spitze SP und bei $UE_1$ eine negative Spitze SN. Die Winkellagen dieser beiden Spitzen $\mathcal{S}(UA_1)$ und $\mathcal{S}(UE_1)$ sind leicht messbar und entsprechen den Winkeln der Eintrittskante und der Austrittskante des Lichtflecks beim Abtastkreis. Die beiden gemessenen Zahlen $\mathcal{S}(UA_1)$ und $\mathcal{S}(UE_1)$ sind die Identifikationsdaten des ausgewählten Lichtflecks, welche in der Zentralstation im Informationsspeicher, z.B. gemäss Fig. 4c mit dem Binär-Index 1 für die Eintrittskante und dem Binär-Index 0 für die Austrittskante versehen, gespeichert werden.

Sucht man sich aus dem grossen Angebot der Lichtflecke z.B. zwei geeignete "halbzufällig" aus, und legt je nur eine einzige Abtastlinie über den Lichtfleck, so besteht die zu speichernde Messinstruktion aus sechs z.B. dreistelligen Dezimalzahlen und die Identifikationsdaten aus vier z.B. dreistelligen Dezimalzahlen, also im Vergleich zur "normalen" Pattern-Recognition eine ausserordentlich kleine Informationsmenge und demgemäss geringer Aufwand in der Zentralstation zur Ermittlung der Daten und auch geringerer Speicherbedarf.

Dieser geringe Informationsumfang genügt dann, wenn die Daten
chiffriert werden, da ein Unbefugter ja nicht weiss, welche Bereiche
für die Identifikationsdaten ausgewählt wurden. Wird dagegen
nicht chiffriert, ist es angezeigt, eine grössere Anzahl von Lichtflecken abzutasten bzw. über einzelne Lichtflecke zwei oder mehrere
Abtastlinien zu legen.

Beim Vergleich der gespeicherten Identifikationsdaten mit den
im Prüfgerät entsprechend den Messinstruktionen gemessenen Identifikationsdaten müssen kleine, von den Ungenauigkeiten der Mess-
und Prüfeinrichtung herrührende Abweichungen toleriert werden.
Bei Abtastung mit Photodioden-Array kann auch der Abtast-Mittelwert von zwei oder drei nebeneinander liegenden Photodioden
massgebend sein.

An den Behälter 3 werden keinerlei Anforderungen an Nichtkopierfähigkeit gestellt, da die Sicherheit gegen Fälschung
in der Messung der Identifikationsdaten des Edelsteins selbst liegt.

Natürlich könnte bei stillstehendem Photodioden-Array
auch der Edelsteinbehälter um die Hauptsymmetrieachse 11 drehbar
sein.

Im Informationsspeicher können über die Identifikationsdaten hinaus auch die übrigen Edelsteinmerkmale des Zertifikats
gespeichert sein.

Durch die halbzufällige und halb visuelle Auswahl der Identifikationsdaten ist es möglich, nur sehr zuverlässige, im Prüfgerät
vollautomatisch auswertbare Merkmale auszuwählen.

Anstelle der photoelektrischen Abtastung mittels Photodioden-
Array kann auch eine einzelne Photozelle 6213 gemäss Fig. 5 verwendet
werden. Diese ist mit einem nicht gezeichneten Stellmotor 622
um die Hauptsymmetrieachse 11 drehbar und mittels eines zweiten Stellmotors 622a mittels eines Seilgetriebes 6223, 6224 radial verstellbar.

Anstelle in Umfangsrichtung könnte die Abtastung natürlich
auch in radialer Richtung erfolgen.

Bei einer weiteren Ausführungsform ist der Edelstein allein
im Behälter 2 mit dem Sichtfenster 32 montiert. Der Informationsspeicher 2 ist dann eine separate Magnetstreifenkearte in Kreditkartenform. Die Identifikationsdaten und Messinstruktionen sind im
Magnetstreifen gespeichert. Die weiteren Zertifikationsdaten des Edelsteins können ebenfalls im Magnetstreifen gespeichert sein.

Für einfachere Fälle bzw. weniger wertvolle Edelsteine kann
auf die Verschlüsselung verzichtet werden. Ferner kann auf die
Festlegung und Speicherung der Messinstruktionen verzichtet werden,
wobei dann immer die gleichen Bildbereiche abgetastet und die gleichen
Identifikationsdaten gemessen und verglichen werden.

Patentansprüche

1. Verfahren zur Identifikation von Edelsteinen, wobei für jeden Edelstein ein individuelles Zertifikat erstellt wird, in dem charakteristische Identifikationsmerkmale des betreffenden Steins festgehalten sind, und wobei zur Prüfung eines Edelsteins seine charakteristischen Merkmale ermittelt und mit den in dem ihm zugeordneten Zertifikat festgehaltenen Merkmalen verglichen werden, dadurch gekennzeichnet, dass als Identifikationsmerkmale solche ausgewählt werden, die maschinelle geprüft werden können, dass die die Identifikationsmerkmale repräsentierenden Identifikationsdaten zusammen mit den zu ihrer Ermittlung nötigen Messinstruktionen in maschinell lesbarer Form im Zertifikat festgehalten werden, und dass die Prüfung aufgrund der im Zertifikat enthaltenen Messinstruktionen und Identifikationsdaten maschinell und vorzugsweise automatisch erfolgt.

2. Verfahren nach Anspruch 1, dadurch gekennzeichnet, dass die Messinstruktionen und/oder die Identifikationsdaten in verschlüsselter Form im Zertifikat festgehalten werden.

3. Verfahren nach Anspruch 1 oder 2, dadurch gekennzeichnet, dass als Zertifikat ein Datenspeicher verwendet wird.

4. Verfahren nach einem der Ansprüche 1 bis 3, dadurch gekennzeichnet, dass bei der Erstellung des Zertifikats aus der Vielzahl der infrage kommenden Identifikationsmerkmale eine eine relativ geringe Anzahl umfassende, willkürliche und/oder zufällig Auswahl getroffen wird, wobei die Auswahlinstruktionen als Teil der Messinstruktionen auf dem Zertifikat fesgehalten werden.

5. Verfahren nach einem der Ansprüche 1-4, dadurch gekennzeichnet, dass als Identifikationsmerkmale zumindest ausgewählte Teile eines aus einzelnen Lichtflecken bestehenden Edelsteinbilds verwendet werden, welches entsteht, wenn der Edelstein mit Licht aus vorzugsweise definierter Richtung angestrahlt wird und das von seinen Flächen reflektierte und/oder das aus seinen Flächen austretende Licht auf einer Bildfläche auftrifft.

6. Verfahren nach Anspruch 5, dadurch gekennzeichnet, dass als Identifikationsmerkmale die durch fotoelektrische Abtastung ausgewählter Bereiche des Edelsteinbilds gewonnenen Identifkationsdaten verwendet werden, wobei Position und Grösse bzw. Gestalt der ausgewählten Bereiche Bestandteil der Messinstruktionen sind.

7. Verfahren nach Anspruch 6, dadurch gekennzeichnet, dass wenigstens zwei Bereiche ausgewählt werden, von denen einer einen durch Reflexion an einer Edelsteinfläche entstandenen Reflexionslichtfleck und einer einen Durchdringungslichtfleck enthält, der durch einen nach Refraktion, eventuell Dispersion und Totalreflexion im Inneren des Edelsteins aus einer Edelsteinfläche austretenden Lichtstrahl erzeugt wird.

8. Verfahren nach Anspruch 6 oder 7, dadurch gekennzeichnet, dass die ausgewählten Bereiche linienförmig sind und jeweils ausserhalb eines Lichtflecks beginnen und enden.

9. Verfahren nach Anspruch 8, dadurch gekennzeichnet, dass die linienförmigen Bereiche Bögen konzentrischer Kreise oder Abschnitte von durch einen gemeinsamen Zentralpunkt laufenden Strahlen sind.

10. Verfahren nach einem der Ansprüche 5-9, dadurch gekennzeichnet, dass die Einfallsrichtung des Lichts relativ zum Edelstein variabel und Bestandteil der Messinstruktionen ist.

11. Verfahren nach einem der voranstehenden Ansprüche, dadurch gekennzeichnet, dass der Edelstein in einem Aufbewahrungs- und Transportbehältnis in definierter Position gehaltert und die maschinelle Ermittlung der Identifikationsmerkmale am im Behältnis befindlichen Edelstein ausgeführt wird.

12.    Verfahren nach Anspruch 11, dadurch gekennzeichnet, dass das die Identifikationsmerkmale und Messinstruktionen in maschinell lesbarer Form enthaltende Zertifikat zusammen mit dem Edelstein in ein und demselben Aufbewahrungs- und Transportbehältnis angeordnet und bei der Prüfung des Edelsteins direkt im Behältnis ausgelesen wird.

13.    Verfahren nach Anspruch 2, dadurch gekennzeichnet, dass die Messinstruktionen und/oder Identifikationsdaten durch eine Kryptoinformation, welche durch Chiffrieren aus bzw. mit einer nur dem rechtmässigen Besitzer des Edelsteins bekannten Kenninformation gebildet ist, gesichert werden.

14.    Verfahren nach einem der vorangehenden Ansprüche, dadurch gekennzeichnet, dass das Zertifikat ausser den für die Prüfung benötigten Identifikationsdaten noch weitere den Edelstein charakterisierende Daten enthält.

15.    Vorrichtung zur Identifikation von Edelsteinen mit einer Zertifikaterstellungseinrichtung ( 9a ) und einer Prüfeinrichtung ( 9b ), dadurch gekennzeichnet, dass die Zertifikaterstellungseinrichtung ( 9a ) Mittel ( 6 ) zur maschinellen Ausmessung eines Edelsteins ( 1 ) bezüglich charakteristischer Identifikationsmerkmale sowie Mittel ( 81 ) aufweist, welche die bei der Ausmessung gewonnenen Identifikationsdaten sowie die für die Ausmessung nötigen, den Messvorgang festlegenden Messinstruktionen auf einen dem betreffenden Edelstein als Zertifikat zugeordneten Datenträger ( 2 ) aufzeichnen, und dass die Prüfeinrichtung ( 9b ) Mittel ( 71 ) zur Auslesung der auf dem Datenträger ( 2 ) vorhandenen Identifikationsdaten und Messinstruktionen, Mittel ( 6 ) zur maschinellen Ausmessung des Edelsteins nach Massgabe der ausgelesenen Messinstruktionen und Mittel ( 75 ) zum Vergleich der dabei gewonnenen Identifikationsdaten mit den vom Datenträger ( 2 ) abgelesenen Identifikationsdaten umfasst.

16.    Vorrichtung nach Anspruch 15, dadurch gekennzeichnet, dass die Zertifikaterstellungseinrichtung ( 9a ) Mittel ( 72 ) zum Chiffrieren der Identifikationsdaten und/oder der Messinstruktionen enthält, und dass die Prüfeinrichtung ( 9b ) mit Mitteln ( 72 ) zum Dechiffrieren der vom Datenträger ( 2 ) abgelesenen Daten versehen ist.

17.    Vorrichtung nach Anspruch 15 oder 16, dadurch gekennzeichnet, dass die Mittel ( 6 ) zur maschinellen Ausmessung des Edelsteins in der Zertifikaterstellungseinrichtung ( 9a ) und in der Prüfeinrichtung ( 9b ) eine den zu messenden Edelstein beaufschlagende Lichtquelle ( 61 ), eine Auffangfläche ( 66 ) für das vom Edelstein zurückgeworfene Licht und eine photoelektrische Abtastvorrichtung ( 67 ) für das auf der Auffangfläche erzeugte, für den Edelstein charakteristische Lichtfleckenmuster umfassen.

18.    Vorrichtung nach Anspruch 16, dadurch gekennzeichnet, dass die Ausmessmittel ( 6 ) mit Auswahlmitteln ( 77 ) versehen sind, welche die photoelektrische Abtastung ausgewählter Bereiche der Auffangfläche ( 66 ) bzw. die Auswahl der aus diesen Bereichen stammenden Abtastwerte für die weitere Verarbeitung bewirken.

19.    Vorrichtung nach Anspruch 18, dadurch gekennzeichnet, dass in der Zertifikaterstellungseinrichtung ( 9a ) die Auswahlmittel ( 77 ) von Hand und/oder einem Zufallsgenerator ( 84 ) gesteuert sind, und dass Mittel ( 81 ) vorgesehen sind, welche die Lage und die Grösse der ausgewählten Bereiche als Messinstruktionen auf dem Datenträger ( 2 ) aufzeichnen, und dass in der Prüfeinrichtung ( 9b ) die Auswahlmittel von den vom Datenträger ( 2 ) abgelesenen Messinstruktionen gesteuert sind.

20. Vorrichtung nach Anspruch 17, dadurch gekennzeichnet, dass die Position der Lichtquelle (61) relativ zum Edelstein (1) verstellbar und Teil der Messinstruktionen ist, und dass in der Prüfeinrichtung (9b) Mittel (612) vorhanden sind, welche die Lichtquelle (61) aufgrund der abgelesenen Messinstruktionen automatisch in die entsprechende Position bringen.

21. Vorrichtung nach Anspruch 17, dadurch gekennzeichnet, dass die photoelektische Abtastvorrichtung (67) einen um das Zentrum (11) der Auffangfläche (66) relativ zu dieser drehbaren Abtastkopf (62) aufweist, der die Auffangfläche (66) nach geraden, radialen Linien oder nach Kreisbogenlinien abtastet.

22. Vorrichtung nach Anspruch 21, dadurch gekennzeichnet, dass der Abtastkopf (62) ein lineares Photodiodenfeld (621) aufweist, welches bezüglich seines Drehzentrums radial gerichtet ist.

23. Vorrichtung nach Anspruch 17, dadurch gekennzeichnet, dass die Auffangfläche (66) sichtbar angeordnet ist und dass die manuelle Auswahl der abzutastenden Bereiche visuell kontrollierbar ist.

24. Vorrichtung nach Anspruch 17, dadurch gekennzeichnet, dass der Edelstein (1) in einem Behältnis (3) angeordnet ist, welches auch den Datenträger (2) enthält, und dass an der Zertifikaterstellungseinrichtung (9a) und an der Prüfeinrichtung (9b) Anschläge (41) und Anschlüsse (22) zum Positionieren des Behältnisses (3) und Anschliessen des Datenträgers (2) an die Aufzeichnungs- bzw. Auslesemittel (81,71) vorgesehen sind.

25. Vorrichtung nach Anspruch 16, dadurch gekennzeichnet, dass in der Zertifikaterstellungseinrichtung (9a) Mittel (78) zur Eingabe einer geheimen Kenninformation sowie Mittel (72) zum Erzeugen einer Kryptoinformation aus der Kenninformation sowie zum Aufzeichnen der Kryptoinformation auf dem Datenträger vorgesehen sind, und dass
in der Prüfeinrichtung ( 9b ) ebenfalls Mittel ( 78 ) zur Eingabe
einer Kenninformation vorgesehen sowie weitere Mittel (72,74) vorhanden
sind, die entweder aus der eingegebenen Kenninformation eine Kryptoinformation bilden und mit der vom Datenträger abgelesenen Kryptoinformation vergleichen oder die aus der abgelesenen Kryptoinformation
die Kenninformation zurückgewinnen und mit der eingegebenen Kenninformation vergleichen.

0042361

*Fig. 1*

Fig.2

Fig. 3

Fig. 4

Fig. 5

Fig. 6

Fig. 7

Europäisches
Patentamt

**EUROPÄISCHER RECHERCHENBERICHT**

| | EINSCHLÄGIGE DOKUMENTE | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| | GB - A - 1 416 568 (S. WILSON) <br> * Seiten 2,3,6-8; Figuren 1-3, 11,15-18,20,21 * <br> -- | 1,3,5, 6,8,14, 15,17, 21,22 | G 01 N 21/87 |
| | GB - A - 1 428 469 (GRETAG A.G.) <br> * Seiten 1-3,6; Figuren 1-3 * <br> -- | 2,13, 14,16, 25 | |
| A | US - A - 3 947 120 (C. BAR ISSAC et al.) <br> * Spalten 1-4; Figur 1 * <br> -- | 1,15 | |
| A | US - A - 3 867 032 (G. BRUCK) <br> * Spalten 5-8; Figuren 1,6,8, 13 * <br> ------ | 1,5,6, 17,21, 22,24 | |

RECHERCHIERTE SACHGEBIETE (Int. Cl.³)

G 01_N 21/87

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 29.08.1981 | BOEHM |

EPA form 1503.1   06.78